# EUROPÄISCHE PATENTSCHRIFT

(11) **EP 1 891 346 B1**
(45) Veröffentlichungstag und Bekanntmachung des Hinweises auf die Patenterteilung: **11.04.2012**
(21) Anmeldenummer: 06777300.2
(22) Anmeldetag: 12.06.2006
(51) Int. Cl.: F16C 39/06

(54) **MAGNETISCHE LAGEREINRICHTUNG EINER ROTORWELLE GEGEN EINEN STATOR MIT INEINANDER GREIFENDEN ROTORSCHEIBENELEMENTEN UND STATORSCHEIBENELEMENTEN**
MAGNETIC BEARING DEVICE OF A ROTOR SHAFT AGAINST A STATOR WITH ROTOR DISC ELEMENTS, WHICH ENGAGE INSIDE ONE ANOTHER, AND STATOR DISC ELEMENTS
SYSTEME DE PALIER MAGNETIQUE D'ARBRE ROTORIQUE CONTRE UN STATOR, COMPORTANT DES ELEMENTS DE DISQUES ROTORIQUES ET DES ELEMENTS DE DISQUES STATORIQUES EN PRISE MUTUELLE

(30) Priorität: 17.06.2005 DE 102005028209
(43) Veröffentlichungstag der Anmeldung: 27.02.2008
(73) Patentinhaber: SIEMENS AKTIENGESELLSCHAFT, 80333 München (DE)
(72) Erfinder: RIES, Günter, 91056 Erlangen (DE)
(86) Internationale Anmeldenummer: PCT/EP2006/063083
(87) Internationale Veröffentlichungsnummer: WO 2006/134084

(56) Entgegenhaltungen:
- EP-A1- 0 413 851
- US-A- 4 268 095
- US-B1- 6 770 995

## Beschreibung

Die Erfindung bezieht sich auf eine Einrichtung zur magnetischen Lagerung einer Rotorwelle gegen einen Stator mit folgenden Merkmalen:
a) Ein erster Lagerteil ist mit der Rotorwelle verbunden und von einem zweiten, dem Stator zugeordneten Lagerteil unter gegenseitiger Beabstandung umgeben,
b) der erste Lagerteil enthält senkrecht zur Achse der Rotorwelle ausgerichtete, in Richtung der Achse hintereinander angeordnete weichmagnetische Rotorscheibenelemente, die jeweils unter Ausbildung eines Zwischenraums beabstandet sind,
c) der zweite Lagerteil enthält senkrecht zur Rotorwellenachse ausgerichtete, in Richtung der Rotorwellenachse hintereinander angeordnete, untereinander beabstandete weichmagnetische Statorscheibenelemente, die jeweils in einen der Zwischenräume benachbarter Rotorscheibenelemente hineinragen,
d) zwischen den Elementen ist ein im Wesentlichen in axialer Richtung gerichteter Magnetfluss ausgebildet.

Eine entsprechende Lagereinrichtung geht z.B. aus der DE 38 44 563 hervor.

Magnetische Lagereinrichtungen erlauben eine berührungs- und verschleißfreie Lagerung von bewegten Teilen. Sie benötigen keine Schmiermittel und können reibungsarm konstruiert werden.

Herkömmliche (konventionelle) Radial- oder Axialmagnetlagereinrichtungen benutzen magnetische Kräfte zwischen stationären Elektromagneten eines Stators und mitrotierenden ferromagnetischen Elementen eines Rotorkörpers. Die Magnetkräfte sind bei diesem Lagertyp immer anziehend. Als Folge davon kann prinzipiell keine inhärent stabile Lagerung in allen drei Raumrichtungen erzielt werden. Solche Magnetlagereinrichtungen benötigen deshalb eine aktive Lagerregelung, die über Lagesensoren und Regelkreise die Ströme von Elektromagneten steuern und Abweichungen des Rotorkörpers aus seiner Solllage entgegenwirken. Die mehrkanalig auszuführende Regelung benötigt eine aufwendige Leistungselektronik. Entsprechende Magnetlagereinrichtungen werden z.B. bei Turbomolekularpumpen, Ultrazentrifugen, schnelllaufenden Spindeln von Werkzeugmaschinen und Röntgenröhren mit Drehanoden eingesetzt; auch eine Verwendung bei Motoren, Generatoren, Turbinen und Kompressoren ist bekannt.

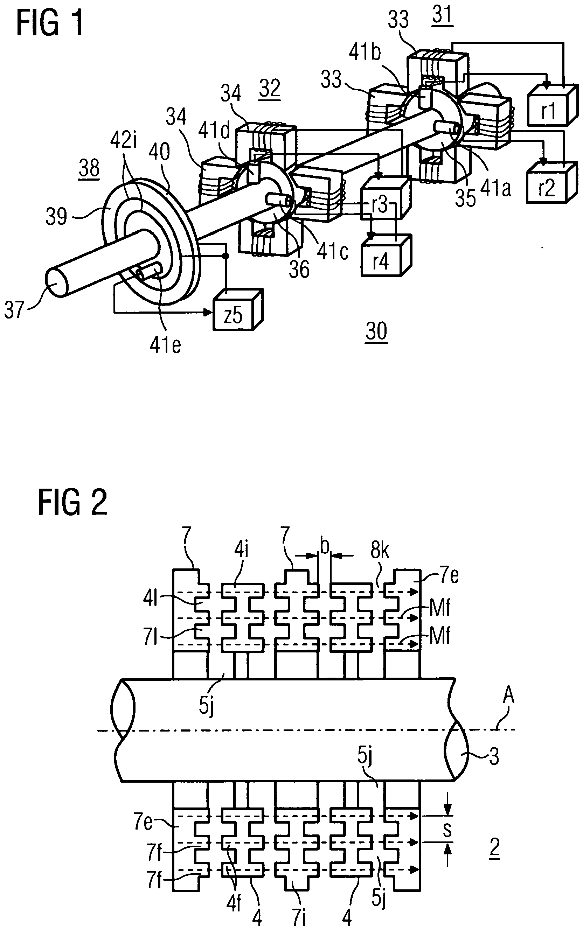

Der prinzipielle Aufbau einer entsprechenden Lagereinrichtung 30 ist in Figur 1 skizziert. In der Figur sind zwei aktive Radiallager 31 und 32 mit Erregermagneten 33 und 34 und Lagerrotoren 35 und 36 an einer Rotorwelle 37, ein aktives Axiallager 38 mit Rotorscheiben 39 und 40 an der Rotorwelle 37 und konzentrischen Wicklungen 42i an den Rotorscheiben sowie fünf Abstandssensoren 41a bis 41e entsprechend den jeweils zwei lateralen Freiheitsgraden pro Radiallager und dem einen Freiheitsgrad des Axiallagers angedeutet. Außerdem sind fünf zugeordnete Regelkreise r1 bis r4 bzw. z5 erforderlich. Weil bei einer solchen Lagereinrichtung bei kleiner werdendem Lagerspalt die Anziehungskräfte zunehmen, sind entsprechende Einrichtungen von vornherein instationär. Die Lage der Rotorwelle 37 muss daher über die Regelkreise, bestehend aus Abstandsmessung mittels der Sensoren 41a bis 41e mit nachgeordnetem Regler und nachgeordnetem Verstärker, der die Erregermagnete 33 und 34 speist, stabilisiert werden. Entsprechende Lagereinrichtungen sind dementsprechend aufwendig. Gegen einen plötzlichen Ausfall des Regelkreises muss zusätzlich ein mechanisches Fanglager vorgesehen werden.

Bekannt sind ferner z.B. aus der DE 44 36 831 C2 magnetische Lagereinrichtungen mit Permanentmagneten und Hoch-T_{c}-Supraleitermaterial. Solche Lagereinrichtungen sind eigenstabil, d.h. sie benötigen keine Regelung. Wegen der erforderlichen kryogenen Betriebstemperatur des Supraleitermaterials von insbesondere unter 80 K sind jedoch eine thermische Isolierung und eine Kälteversorgung durch ein entsprechendes kryogenes Kühlmittel oder durch eine Kältemaschine erforderlich.

Bekannt sind auch in einer Richtung eigenstabile Lagereinrichtungen mit Magnetfluss, weichmagnetischen Teilen wie aus Eisen und mit Permanentmagneten. Bei entsprechenden Ausführungen solcher Lagereinrichtungen, wie sie z.B. aus der DE 34 08 047 A und der DE 38 44 563 A zu entnehmen sind, richten sich Dauermagnetringe auf einer Welle axial in erster Linie mit den Polen eines Eisenjochs aus und bewirken so eine radiale Zentrierung. Der Magnetfluss wird hier durch Erregerspulen verstärkt, wobei gegebenenfalls der axial instabile Freiheitsgrad durch einen elektronischen Regelkreis stabilisiert wird. Dabei können mehrere axial hintereinander abwechselnd stationäre und rotierende Ringmagnete mit gleicher axialer Magnetisierung aufgereiht sein und eine radiale Lagerfunktion erfüllen. Auch hier muss der axiale Freiheitsgrad aktiv stabilisiert werden.

Aus der DE 199 44 863 A geht außerdem eine Pumpe mit einer abgewandelten Radiallagerung hervor. Hier ist ein Rotor mit Dauermagnetzylindern statt Ringen vorgesehen, wobei sich an diesem stationäre Dauermagnete oder Eisenzylinder axial gegenüberstehen. Ein den Rotor umschließender Stator weist elektrische Erregerspulen auf. Außerdem sind besondere Radialstabilisatoren vorhanden.

Alle vorstehend angesprochenen Lagereinrichtungen mit permanentmagnetischen Teilen haben jedoch eine verhältnismäßig geringe Tragkraft und eine unzureichende Lagersteifigkeit.

Aufgabe der vorliegenden Erfindung ist es, eine magnetische Lagereinrichtung für eine berührungsfreie Lagerung einer Welle, insbesondere für eine schnelllaufende Maschine wie z.B. einen Turbokompressor, anzugeben, die gegenüber dem genannten Stand der Technik weniger aufwendig ist. Insbesondere soll unter Berücksichtigung dynamischer Kräfte und enger Spalttoleranzen eine hohe Tragkraft und eine hohe Lagersteifigkeit zu gewährleisten sein.

Diese Aufgabe wird erfindungsgemäß mit den in Anspruch 1 aufgeführten Maßnahmen gelöst.

Demgemäß sollen bei der Einrichtung zur magnetischen Lagerung einer Rotorwelle gegen einen Stator folgende Merkmale vorgesehen sein, nämlich
- dass ein erster Lagerteil mit der Rotorwelle verbunden und von einem zweiten, dem Stator zugeordneten Lagerteil unter Beabstandung umgeben ist,
- dass der erste Lagerteil senkrecht zur Achse der Rotorwelle ausgerichtete, in Richtung dieser Achse hintereinander angeordnete weichmagnetische Rotorscheibenelemente enthält, die jeweils unter Ausbildung eines Zwischenraums beabstandet sind,
- dass der zweite Leiterteil senkrecht zur Rotorwellenachse ausgerichtete, in Richtung dieser Achse hintereinander angeordnete, untereinander beabstandete weichmagnetische Statorscheibenelemente enthält, die jeweils in einen der Zwischenräume Rotorscheibenelemente hineinragen,
- dass die Rotorscheibenelemente und die Statorscheibenelemente auf ihren jeweils einander zugewandten Seiten mit ringförmigen, sich jeweils über einen Lagerspalt gegenüberstehende zahnartige Fortsätze versehen sind und
- dass den Rotorscheibenelementen oder den Statorscheibenelementen magnetfelderzeugende Mittel zum Erzeugen eines zwischen diesen Elementen im Wesentlichen in axialer Richtung gerichteten Magnetflusses zugeordnet sind.

Bei der erfindungsgemäßen Lagereinrichtung treiben im Gegensatz zum Stand der Technik die externen magnetfelderzeugenden Mittel einen Magnetfluss über den jeweiligen Lagerspalt und magnetisieren die zahnartigen Fortsätze aus dem weichmagnetischen Material wie insbesondere aus Eisen. Dabei wird die Magnetflussdichte im jeweiligen Spalt inhomogen, wodurch Kräfte auf Eisenoberflächen ausgeübt werden. Vorteilhaft kann dabei in weichmagnetischem Material wie Eisen eine erheblich größere Magnetisierung und damit eine größere Lagerkraft pro Fläche erreicht werden als mit Anordnungen aus Permanentmagnetmaterial wie z.B. Neodym-Eisen-Bor (Nd-Fe-B) allein.

Nach dem Reluktanzprinzip will das System den magnetischen Widerstand minimieren und die zahnartigen Fortsätze so ausrichten, dass sie sich möglichst nahe gegenüberstehen. Bei einer radialen Auslenkung bewirken die Magnetkräfte eine proportionale rückstellende Kraft, weshalb dann eine Radialregelung nicht mehr erforderlich ist.

Die maximale Radialkraft wird bei Verschiebung um eine halbe Breite eines zahnartigen Fortsatzes aufgebracht. Da die Längenskala durch die radiale Breite der zahnartigen Fortsätze und der dazu benachbarten Zwischenräume gegeben ist, kann die Lagersteife durch die Abmessungen der zahnartigen Fortsätze in weiten Grenzen gewählt werden. Insbesondere lassen sich durch feine Zahnung sehr steife Lager realisieren. Bei symmetrischer Anordnung mit beidseitig gleichen Lagerspalten heben sich die axialen Kräfte auf die Rotorscheibenelemente auf. Allerdings ist dieses Gleichgewicht axial instabil und muss durch zusätzliche Mittel wie aktiv geregelte Magnetlager, gegebenenfalls auch durch mechanische Lager, stabilisiert werden. Pro Welle ist aber nur noch ein einziger Regelkreis für ein einziges Axiallager nötig statt fünf wie beim Stand der Technik gemäß Figur 1 mit aktiv geregelten Radiallagern.

Andererseits kann durch geringe Axialverschiebung eine erhebliche magnetische stationäre Axialkraft ohne Bedarf an elektrischer Leistung aufgebracht werden, so dass das Axiallager nur noch den dynamischen Anteil der Axiallast aufnehmen muss. Dies ist durch eine Einstellung einer Axialregelung zu erreichen, wobei als Sollwert ein Minimum des zeitlichen Mittelwertes des Magnetstroms des Axiallagers vorgegeben wird.

Vorteilhafte Ausgestaltungen der erfindungsgemäßen Lagereinrichtung gehen aus den von Anspruch 1 abhängigen Ansprüchen hervor. Dabei kann die Ausführungsform nach Anspruch 1 mit den Merkmalen eines der Unteransprüche oder vorzugsweise auch denen aus mehreren Unteransprüchen kombiniert werden. Demgemäß kann die Lagereinrichtung nach der Erfindung zusätzlich noch folgende Merkmale aufweisen:
- So kann außerhalb der Zwischenräume zwischen den Rotorscheibenelementen und den Statorscheibenelementen am radial inneren oder äußeren Rand der Scheibenelemente, denen nicht die magnetfelderzeugenden Mittel zugeordnet sind, sich axial erstreckendes weichmagnetisches Material zum Schließen des Magnetflusskreises wie ein axial verlaufender Jochkörper oder zumindest Teile der Rotorwelle vorgesehen sein. Mit solchen Teilen aus weichmagnetischem Material kann der magnetische Widerstand des Magnetflusskreises verkleinert werden, so dass damit eine entsprechende Vergrößerung der Flussdichte zwischen den zahnartigen Fortsätzen und folglich eine verbesserte magnetische Steifigkeit zu erreichen sind.
- Vorteilhaft können die magnetfelderzeugenden Mittel permanentmagnetische Elemente sein, wobei diese Elemente zumindest in einige der Rotorscheibenelemente bzw. der Statorscheibenelemente integriert sein können. Entsprechende Lagereinrichtungen sind verhältnismäßig kompakt aufzubauen.
- Dabei können vorteilhaft die Scheibenelemente, welche mit den permanentmagnetischen Elementen versehen sind, jeweils axial in zwei Hälften unterteilt sind, zwischen denen dann die permanentmagnetischen Elemente angeordnet sind.
- Vorteilhaft ist es im Hinblick auf hohe Flussdichten zwischen den Scheibenelementen und eine effektive Nutzung des permanentmagnetischen Materials auch, wenn die Scheibenelemente mit den permanentmagnetischen Elementen radial eine größere Ausdehnung aufweisen als die Scheibenelemente ohne permanentmagnetische Elemente.
- Statt einer Verwendung von permanentmagnetischen Elementen oder zusätzlich können die magnetfelderzeugenden Mittel von wenigstens einer Wicklung eines Elektromagneten gebildet sein. Diese Wicklung kann am radial inneren oder äußeren Rand der Rotorscheibenelemente oder Statorscheibenelemente angeordnet sein, wobei sie axial verlaufendem weichmagnetischem Material eines Jochkörpers oder der Rotorwelle zugeordnet sein kann. Die Wicklung befindet sich außerhalb der zwischen den Rotorscheibenelementen und den Statorscheibenelementen gebildeten Zwischenräume an dem Rand der Elemente, denen nicht die magnetfelderzeugenden Mittel zugeordnet sind, zum Schließen des Magnetflusskreises.
- Erfindungsgemäß sind die einander zugewandten, mit den zahnartigen Fortsätzen versehenen Flachseiten der Rotorscheibenelemente und der Statorscheibenelemente gegenüber einer Senkrechten auf der Rotorwellenachse geneigt angeordnet. Mit einer derartigen Neigung ergeben sich keilförmige Längsschnittformen. Die axiale Ausdehnung (Scheibendicke) und die Neigungswinkel werden dabei so gewählt, dass die Scheibenelemente den Magnetfluss überall aufnehmen können, ohne in die magnetische Sättigung zu kommen.

Weitere vorteilhafte Ausgestaltungen der erfindungsgemäßen Lagereinrichtung gehen aus den vorstehend nicht angesprochenen Unteransprüchen hervor.

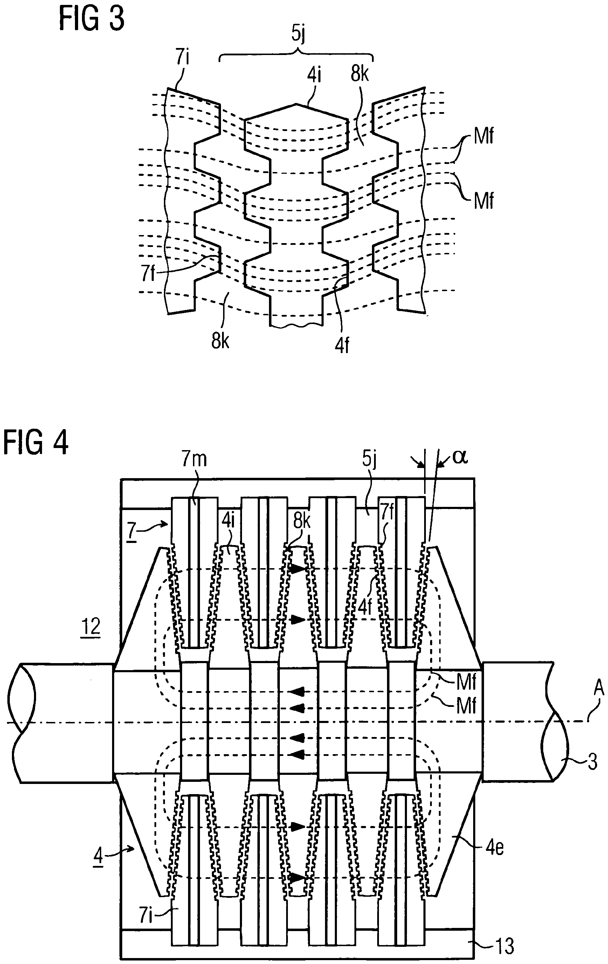

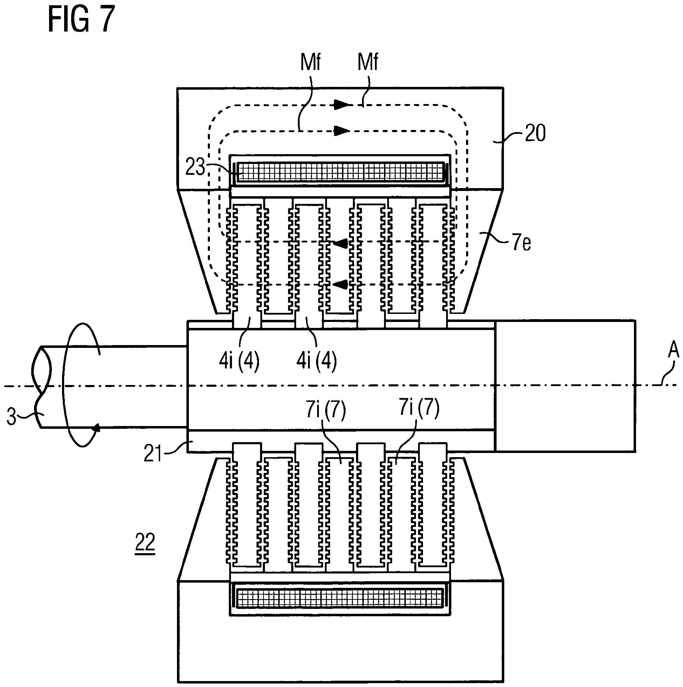

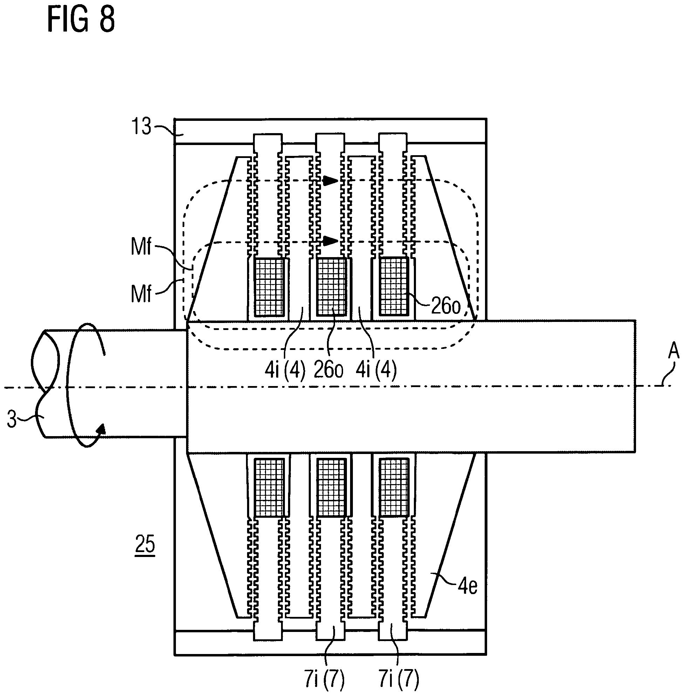

Die Erfindung wird nachfolgend an Hand von bevorzugten Ausführungsbeispielen unter Bezugnahme auf die Zeichnung noch weiter erläutert. Dabei zeigen jeweils in einem axialen Längsschnitt und in leicht schematisierter Form
- deren Figur 2: den prinzipiellen Aufbau einer magnetischen Lagereinrichtung,
- deren Figur 3: den Feldlinienverlauf zwischen erfindungsgemäßen zahnartigen Fortsätzen von Rotorscheiben- und Statorscheibenelementen bei einer radialen Auslenkung einer Rotorwelle,
- deren Figuren 4 und 5: erfindungsgemäße und Figur 6 eine weitere Ausführungsformen magnetischer Lagereinrichtungen mit Permanentmagneten als magnetfelderzeugenden Mitteln
- sowie deren Figuren 7 und 8: spezielle Ausführungsformen magnetischer Lagereinrichtungen mit jeweils mindestens einer Elektromagnetwicklung als magnetfelderzeugenden Mitteln.

In den Figuren sind sich entsprechende Teile jeweils mit denselben Bezugszeichen versehen.

In den Figuren nicht näher ausgeführte Teile von erfindungsgemäßen Magnetlagereinrichtungen sind allgemein bekannt. Die in Figur 2 gezeigte allgemein mit 2 bezeichnete Magnetlagereinrichtung umfasst eine berührungsfrei zu lagernde Rotorwelle 3 mit einem ersten Lagerteil 4, der senkrecht zur Achse A der Rotorwelle 3 ausgerichtete, an dieser befestigte, mitrotierende Rotorscheibenelemente 4i aufweist. Diese Elemente bestehen aus weichmagnetischem Material. Sie sind in axialer Richtung hintereinander unter Ausbildung jeweiliger Zwischenräume 5j beabstandet angeordnet. Ein ortsfester Stator bildet einen zweiten Lagerteil 7 mit ebenfalls untereinander axial beabstandeten, ringscheibenförmigen, die Rotorwelle 3 unter Beabstandung umschließenden Statorscheibenelementen 7i. Auch diese Elemente bestehen aus dem weichmagnetischen Material und ragen berührungsfrei in die Zwischenräume 5j radial hinein, so dass sich eine axial alternierende, kammartige Anordnung von Rotorscheibenelementen 4i und Statorscheibenelementen 7i ergibt. Die Rotorscheibenelemente und Statorscheibenelemente sind auf ihren jeweils einander zugewandten Seiten mit sich jeweils über einen Luftspalt 8k mit geringer axialer Ausdehnung bzw. Breite b gegenüberstehenden zahnartigen Fortsätzen 4f bzw. 7f versehen bzw. zu solchen Fortsätzen gestaltet. Die Fortsätze jedes Scheibenelements sind ringförmig ausgebildet und untereinander konzentrisch angeordnet. Dabei liegt die Breite b erfindungsgemäß zwischen dem 0,05- und 0,25-Fachen des radialen Abstandes s der Mitten von benachbarten Fortsätzen. In der Figur sind ferner von externen, nicht ausgeführten magnetfelderzeugenden Mitteln hervorgerufene Feldlinien eines Magnetflusses Mf durch gestrichelte Linien angedeutet.

An den Stapelenden sind die Endscheibenelemente 7e als einseitig gerillte Flussleitstücke ausgebildet, die zusammen mit einer magnetischen Flussrückführung, für die z.B. eine ferromagnetische Welle oder ein feststehender Eisenjochkörper vorgesehen sein kann, den Magnetflusskreis schließen.

Wie ferner in Figur 2 dargestellt, können die zahnartigen Fortsätzen 4f und 7f der Ringscheibenelemente 4i bzw. 7i im Längsschnitt gesehen rechteckige Gestalt bzw. Querschnitte aufweisen. Dabei können die Lücken 41 und 71 zwischen den Fortsätzen etwa gleich breit und etwa 0,5- bis 1-mal so tief (axial gesehen) sein. Bevorzugt haben die Lücken und die zahnartigen Fortsätze gleiche radiale Abmessungen.

Die ringscheibenförmigen Elemente 4i und 7i sowie alle weiteren magnetflussführenden Teile einer erfindungsgemäßen Magnetlagereinrichtung können bevorzugt aus weichmagnetischen Materialien mit hoher Sättigungsmagnetisierung bestehen, beispielsweise aus Fe, mit Si legiertem Fe oder einer FeCo-Legierung erstellt sein. Der Luftspalt 8k zwischen gegenüberliegenden zahnartigen Fortsätzen 4f und 7f hat dabei eine axiale Breite, die im Allgemeinen zwischen dem 0,2- und 0,6-Fachen der entsprechenden Breite der zahnartigen Fortsätze bzw. der dazu benachbarten Lückentiefe liegt.

Für Radiallager werden die zahnartigen Fortsätze 4i und 7i z.B. auf Eisenscheiben durch beidseitig ringförmig und konzentrisch gerillte Oberflächen ausgebildet. In der in Figur 2 angedeuteten Gleichgewichtslage stehen sich diese Fortsätze 4i und 7i genau gegenüber; bei radialer Auslenkung bewirken die Magnetkräfte eine proportionale rückstellende Kraft. Wie aus dem Verlauf der Magnetflusslinien Mf der Figur 3 an Hand eines Ausschnittes aus einigen der Scheibenelemente 4i und 7i der Ausführungsform nach Figur 2 hervorgeht, versucht das System mit seinen magnetflussführenden Teilen nach dem Reluktanzprinzip den magnetischen Widerstand derart zu minimieren, dass sich die zahnartigen Fortsätze benachbarter Scheibenelemente so ausrichten, dass sie sich wie nach Figur 2 möglichst nahe gegenüberstehen.

Wie ferner aus Figur 3 hervorgeht, sind die zahnartigen Fortsätze erfindungsgemäß auch im Längsschnitt gesehen trapezförmig gestaltet, wobei ihre Seiten gegenüber einer Parallelen zur Rotorwellenachse A bis zu 45° geneigt sind.

In den Figuren 4 bis 8 sind verschiedene Ausgestaltungsmöglichkeiten von magnetischen Lagereinrichtungen angedeutet, die sich jeweils durch ihre Magnetflusskreise mit externen Mitteln zur Erzeugung eines axialen Magnetflusses durch die hintereinander liegenden Scheibenelemente des ersten und zweiten Lagerteils unterscheiden. Die Feldlinien des Magnetflusses Mf sind dabei gestrichelt eingezeichnet.

Bei der in Figur 4 allgemein mit 12 bezeichneten magnetischen Lagereinrichtung sind deren Statorelemente 7i jeweils axial in zwei Hälften unterteilt, zwischen denen sich ein permanentmagnetisches Element als ein magnetfelderzeugendes Mittel befindet. Dementsprechend ist in der Mitte jedes Statorscheibenelementes 7i eine sich radial erstreckende Schicht oder eine Ringscheibe 7m aus dem permanentmagnetischen Material, vorzugsweise aus Nd-Fe-B-Material, eingefügt. Dabei haben die Statorscheibenelemente vorteilhaft einen axial größeren Durchmesser als ihre gerillte, mit den zahnartigen Fortsätzen 7f versehene Wirkfläche, um so im Luftspalt 8k Flussdichten von insbesondere 1 Tesla und mehr zu erreichen und das Magnetmaterial in einem Arbeitspunkt, z.B. zwischen 0,5 und 0,8 Tesla bei NbFeB, mit großem Energieprodukt B*H betreiben zu können. Außerdem sind die einander zugewandten, mit den zahnartigen Fortsätzen 4f und 7f versehenen Flachseiten der, Rotorscheibenelemente 4i und Statorscheibenelemente 7i erfindungsgemäß geneigt angeordnet. Mit einer solchen Neigung ist die Eisendicke dem lokalen Magnetfluss anzupassen. Damit lässt sich die axiale Lagerlänge verhältnismäßig klein halten. Der Neigungswinkel α gegenüber der Senkrechten auf der Rotorwellenachse A sollte dabei so gewählt werden, dass sich trotz der ergebenden Keilform der Scheibenelemente (im Längsschnitt gesehen) in diesen keine Bereiche mit magnetischer Sättigung auftreten. Gemäß dem Ausführungsbeispiel liegt der Winkel α zwischen etwa 7° und 15°, beispielsweise bei etwa 10°. Die mitrotierenden Endscheibenelemente 4e des ersten Lagerteils 4 und die Rotorwelle 3 aus Eisen oder mit Eisenteilen bilden den magnetischen Rückflusspfad. Eine unmagnetische Hülse 13 hält die ortsfesten Statorscheibenelemente 7i an ihrem Außenrand zusammen.

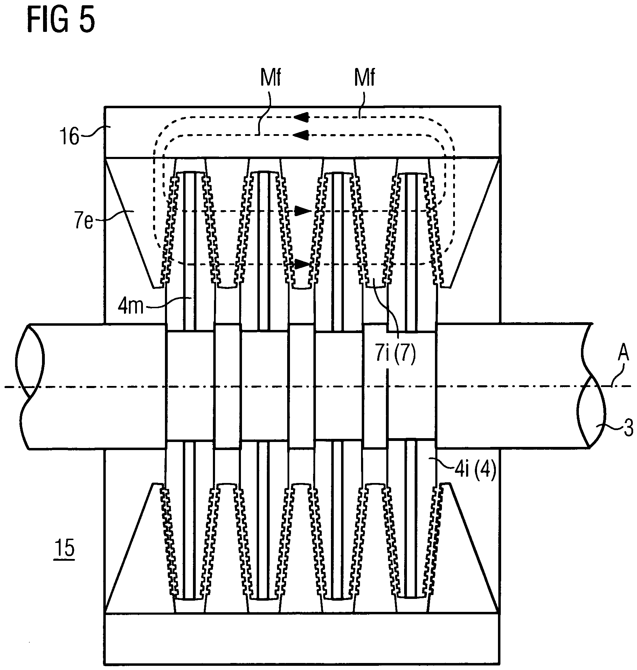

Die in Figur 5 gezeigte, allgemein mit 15 bezeichnete Magnetlagereinrichtung unterscheidet sich von der Einrichtung 12 nach Figur 4 lediglich dadurch, dass nicht ihre Statorscheibenelemente 7i, sondern ihre Rotorscheibenelemente 4i mit dem permanentmagnetischen Material in Form von Schichten oder Scheiben 4m jeweils in der axialen Scheibenmitte versehen sind. Bei dieser Ausführungsform ist die Rotorwelle 3 unmagnetisch; der magnetische Rückschluss wird hier durch ortsfeste Endscheibenelemente 7e und einen feststehenden Außenjochkörper 16 des zweiten Lagerteils 7 am Außenrand der Statorscheibenelemente 7i gebildet.

Bei den Magnetlagereinrichtungen 12 und 22 nach den Figuren 4 und 5 können auch nur einzelne ihrer Ringscheibenelemente 7i bzw. 4i, z.B. jedes zweite, dritte oder vierte Element mit einem entsprechend dickeren NdFeB-Element 7m bzw. 4m ausgerüstet sein. Um einen magnetischen Kurzschluss zu vermeiden, muss dann zwischen den Scheibenelementen und dem jeweiligen magnetischen Rückschlusskörper, im Falle der Figur 4 die Welle 3 bzw. im Falle der Figur 5 ein Außenjochkörper 9, zur magnetischen Isolierung ein unmagnetischer Zwischenraum von der 10- bis 50-fachen Lagerspaltbreite eingefügt sein. Nur die Endscheibenelemente haben hier magnetisch enge Verbindung.

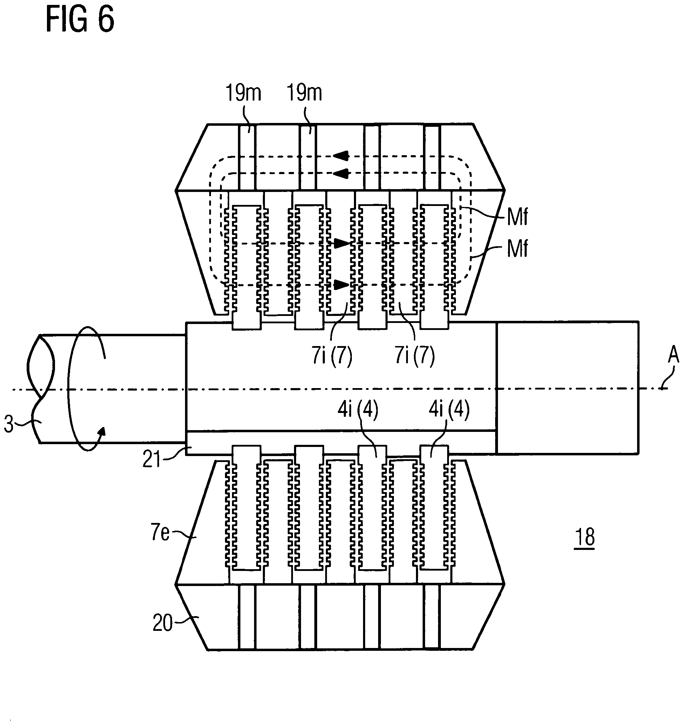

Bei der in Figur 6 gezeigten, allgemein mit 18 bezeichnete Magnetlagereinrichtung sind in deren zweiten Lagerteil 7 ein oder mehrere ringscheibenförmige Elemente 19m in einen magnetflussführenden Außenjochkörper 20 aus weichmagnetischem Material radial ausgerichtet eingefügt. Abgesehen von den radialen flussführenden Endscheibenelementen 7e eines Stators 7 können hier die Scheibenelemente 7i und/oder 4i so dünn sein, wie es die mechanische Belastung erlaubt. Bei Verwendung einer Rotorwelle 3 aus magnetischem Material muss zu den mitrotierenden Rotorscheibenelementen 4i auch hier ein magnetisch isolierendes Zwischenelement 21 vorgesehen werden, das z.B. als unmagnetische Hülse ausgebildet ist. Bei der gezeigten Ausführungsform sollte aber die Welle 3 möglichst unmagnetisch sein.

Statt der Verwendung von permanentmagnetischen Elementen als magnetfelderzeugenden Mitteln können ebenso gut auch Wicklungen von Elektromagneten vorgesehen werden. Die Figuren 7 und 8 zeigen je eine Möglichkeit einer entsprechenden Magnetlagereinrichtung 22 bzw. 25. Die Ausführungsform der Magnetlagereinrichtung 22 nach Figur 7 unterscheidet sich gegenüber der Magnetlagereinrichtung 18 nach Figur 6 folglich dadurch, dass bei ihrem weichmagnetischen Außenjochkörper 20 permanentmagnetische Elemente fehlen und stattdessen an ihm mindestens eine Wicklung 23 eines Elektromagneten angebracht ist. Über den Strom durch die Erregerwicklung 23 ist die magnetische Flussdichte B und damit die Lagersteifigkeit, die proportional zu B² ist, vorteilhaft steuerbar. Auch hier ist im Falle der Verwendung einer Rotorwelle 3 mit magnetischem Material ein magnetisch hinreichend isolierender Zwischenkörper 21 zwischen der Welle und den einzelnen Rotorscheibenelementen 4i erforderlich. Eine entsprechende Ausführungsform zeigt die untere Hälfte der Figur, während bei der oberen Hälfte davon ausgegangen wird, dass die Welle unmagnetisch ist.

Bei der Ausführungsform der Magnetlagereinrichtung 25 nach Figur 8 befinden sich Elektromagnetwicklungen 26o am Innenrand von ortsfesten Statorscheibenelementen 7i. Diese Elemente sind wiederum an ihrem Außenrand von einer nicht-magnetischen Hülse 13 entsprechend Figur 4 zusammengehalten. Hier dient eine Rotorwelle 3 aus magnetischem Material als Rückschlusskörper zur Führung des Magnetflusses Mf. Auch bei dieser Ausführungsform ist die Lagersteifigkeit über die Wicklungen 26o vorteilhaft einstellbar.

Bei den vorstehend erläuterten Ausführungsformen von Magnetlagereinrichtungen 2, 12, 15, 18, 22 und 25 wurde davon ausgegangen, dass die magnetfelderzeugenden Mittel entweder permanentmagnetische Elemente 4m, 7m, 19m oder Magnetwicklungen 23, 26o sind. Selbstverständlich ist zur Erzeugung des gewünschten axialen Magnetflusses Mf über die zahnartigen Fortsätze 4m und 7m der Lagereinrichtungen auch eine Kombination von den in den einzelnen Figuren veranschaulichten permanentmagnetischen Elementen und Wicklungen von Elektromagneten möglich.

Bei den in den Figuren dargestellten Ausführungsformen von erfindungsgemäßen Magnetlagereinrichtungen erstreckt sich jeweils die Rotorwellenachse A in horizontaler Richtung. Selbstverständlich ist auch eine Ausrichtung der Magnetlagereinrichtungen dahingehend möglich, dass ihre Rotorwellenachse in einer dazu geneigten oder senkrechten Richtung liegt. Dabei ist bei allen diesen Lagereinrichtungen die radiale Führung eigenstabil. Der Vorteil einer solchen Lagerung ist, dass nur noch der verbleibende axiale Freiheitsgrad durch ein z.B. aktiv geregeltes Magnetlager stabilisiert werden muss. Dabei können, verglichen mit Lagereinrichtungen unter Verwendung von Permanentmagneten gemäß dem erläuterten Stand der Technik, höhere Felder im jeweiligen Luftspalt erzeugt werden und lässt sich die Struktur der zahnartigen Fortsätze sehr fein gestalten, was zu einer hohen Lagersteifigkeit führt. Bei einer Permanenterregung ist die Radialführung leistungslos. Außerdem ist ein Einsatz in aggressiver Umgebung möglich. Bei den durch Elektromagnetwicklungen erregten Ausführungsformen kann vorteilhaft ein von konventionellen Lagern bekanntes Verfahren zum Durchfahren kritischer Drehzahlen ausgenutzt werden (vgl. DE 42 34 524 A1), wobei über einen Drehzahlgeber die Nähe eines kritischen Wertes erkannt und der Strom und die Lagersteifigkeit kurzzeitig erhöht oder erniedrigt werden können. Auf diese Weise lassen sich mechanische Resonanzen des Gesamtsystems umfahren. Ferner ist durch Einstellung der axialen Position der einzelnen rotierenden Scheibenelemente mit ungleichen Luftspalten leistungslos eine axiale Dauerkraft aufzubringen. Der axiale Regelkreis muss nur noch die axialen zeitabhängigen Kräfte ausgleichen und die axiale Stabilität gewährleisten.

## Patentansprüche

1. Einrichtung zur magnetischen Lagerung einer Rotorwelle (3) gegen einen Stator mit folgenden Merkmalen:
a) ein erster Lagerteil (4) ist mit der Rotorwelle (3) verbunden und von einem zweiten, dem Stator zugeordneten Lagerteil (7) unter gegenseitiger Beabstandung umgeben,
b) der erste Lagerteil (4) enthält senkrecht zur Achse (A) der Rotorwelle (3) ausgerichtete, in Richtung dieser Achse (A) hintereinander angeordnete weichmagnetische Rotorscheibenelemente (4i), die jeweils unter Ausbildung eines Zwischenraums (5j) beabstandet sind,
c) der zweite Lagerteil (7) enthält senkrecht zur Rotorwellenachse (A) ausgerichtete, in Richtung dieser Achse (A) hintereinander angeordnete, untereinander beabstandete weichmagnetische Statorscheibenelemente (7i), die jeweils in einen der Zwischenräume (5j) benachbarter Rotorscheibenelemente (4i) hineinragen,
d) die Rotorscheibenelemente (4i) und die Statorscheibenelemente (7i) sind auf ihren jeweils einander zugewandten Seiten mit ringförmigen, sich jeweils über einen Luftspalt (8k) gegenüberstehenden, zahnartigen Fortsätzen (4f bzw. 7f) versehen,
e) die einander zugewandten, mit den zahnartigen Fortsätzen (4f, 7f) versehenen Flachseiten der Rotorscheibenelemente (4i) und Statorscheibenelemente (7i) sind gegenüber einer Senkrechten auf der Rotorwellenachse (A) geneigt angeordnet,
f) den Rotorscheibenelementen (4i) oder den Statorscheibenelementen (7i) sind magnetfelderzeugende Mittel zur Erzeugung eines zwischen den Scheibenelementen (4i, 7i) im Wesentlichen in einer gemeinsamen axialen Richtung gerichteten Magnetflusses (Mf) zugeordnet,
und
g) der Luftspalt (8k) weist zwischen gegenüberliegenden zahnartigen Fortsätzen (4f bzw. 7f) eine axiale Breite auf, die zwischen dem 0,2-fachen und dem 0,6-fachen der axialen Breite der zahnartigen Fortsätze (4f bzw. 7f) liegt.

2. Magnetlagereinrichtung nach Anspruch 1, **gekennzeichnet durch** eine Neigung der Flachseiten der Rotorscheibenelemente (4i) und der Statorscheibenelemente (7i) um einen Winkel zwischen 7° und 15° gegenüber einer Senkrechten auf der Rotorwellenachse (A).

3. Magnetlagereinrichtung nach Anspruch 1 oder 2, **dadurch gekennzeichnet, dass** die zahnartigen Fortsätze (4f, 7f) in einem Längsschnitt gesehen trapezförmig gestaltet sind.

4. Einrichtung zur magnetischen Lagerung einer Rotorwelle (3) gegen einen Stator mit folgenden Merkmalen:
a) ein erster Lagerteil (4) ist mit der Rotorwelle (3) verbunden und von einem zweiten, dem Stator zugeordneten Lagerteil (7) unter gegenseitiger Beabstandung umgeben,
b) der erste Lagerteil (4) enthält senkrecht zur Achse (A) der Rotorwelle (3) ausgerichtete, in Richtung dieser Achse (A) hintereinander angeordnete weichmagnetische Rotorscheibenelemente (4i), die jeweils unter Ausbildung eines Zwischenraums (5j) beabstandet sind,
c) der zweite Lagerteil (7) enthält senkrecht zur Rotorwellenachse (A) ausgerichtete, in Richtung dieser Achse (A) hintereinander angeordnete, untereinander beabstandete weichmagnetische Statorscheibenelemente (7i), die jeweils in einen der Zwischenräume (5j) benachbarter Rotorscheibenelemente (4i) hineinragen,
d) die Rotorscheibenelemente (4i) und die Statorscheibenelemente (7i) sind auf ihren jeweils einander zugewandten Seiten mit ringförmigen, sich jeweils über einen Luftspalt (8k) gegenüberstehenden, zahnartigen Fortsätzen (4f bzw. 7f) versehen,
e) die zahnartigen Fortsätze (4f, 7f) sind in einem Längsschnitt gesehen trapezförmig gestaltet,
f) den Rotorscheibenelementen (4i) oder den Statorscheibenelementen (7i) sind magnetfelderzeugende Mittel zur Erzeugung eines zwischen den Scheibenelementen (4i, 7i) im Wesentlichen in einer gemeinsamen axialen Richtung gerichteten Magnetflusses (Mf) zugeordnet,
und
g) der Luftspalt (8k) weist zwischen gegenüberliegenden zahnartigen Fortsätzen (4f bzw. 7f) eine axiale Breite auf, die zwischen dem 0,2-fachen und dem 0,6-fachen der axialen Breite der zahnartigen Fortsätze (4f bzw. 7f) liegt.

5. Magnetlagereinrichtung nach einem der vorangehenden Ansprüche, **dadurch gekennzeichnet, dass** außerhalb der Zwischenräume (5j) zwischen den Rotorscheibenelementen (4i) und Statorscheibenelementen (7i) am radial inneren oder äußeren Rand der Scheibenelemente (4i, 7i), denen nicht die magnetfelderzeugenden Mittel zugeordnet sind, sich axial erstreckendes weichmagnetisches Material zum Schließen des Magnetflusskreises vorgesehen ist.

6. Magnetlagereinrichtung nach Anspruch 5, **dadurch gekennzeichnet, dass** das weichmagnetische Material zum Schließen des Magnetflusskreises durch einen axial verlaufenden Jochkörper (16, 20) oder durch zumindest Teile der Rotorwelle (3) bereitgestellt ist.

7. Magnetlagereinrichtung nach einem der vorangehenden Ansprüche, **dadurch gekennzeichnet, dass** die magnetfelderzeugenden Mittel permanentmagnetische Elemente (4m, 7m, 19m) sind.

8. Magnetlagereinrichtung nach Anspruch 7, **dadurch gekennzeichnet, dass** die permanentmagnetischen Elemente (4m, 7m) zumindest in einige der Rotorscheibenelemente (4i) oder Statorscheibenelemente (7i) integriert sind.

9. Magnetlagereinrichtung nach Anspruch 8, **dadurch gekennzeichnet, dass** die Scheibenelemente (4i oder 7i) mit den permanentmagnetischen Elementen (4m oder 7m) jeweils axial in zwei Hälften unterteilt sind, zwischen denen die permanentmagnetischen Elemente (4m, 7m) angeordnet sind.

10. Magnetlagereinrichtung nach Anspruch 8 oder 9, **dadurch gekennzeichnet, dass** die Scheibenelemente (4i oder 7i) mit den permanentmagnetischen Elementen (4m oder 7m) radial eine größere Ausdehnung aufweisen als die Scheibenelemente ohne permanentmagnetische Elemente.

11. Magnetlagereinrichtung nach einem der vorangehenden Ansprüche, **dadurch gekennzeichnet, dass** die magnetfelderzeugenden Mittel von wenigstens einer Wicklung (23, 26) eines Elektromagneten gebildet sind.

12. Magnetlagereinrichtung nach Anspruch 11, **dadurch gekennzeichnet, dass** die wenigstens eine Magnetwicklung (23, 26) am radial inneren oder äußeren Rand der Rotorscheibenelemente (4i) oder der Statorscheibenelemente (7i) angeordnet ist.

13. Magnetlagereinrichtung nach Anspruch 11 oder 12, **dadurch gekennzeichnet, dass** die wenigstens eine Magnetwicklung (23, 26) axial verlaufendem weichmagnetischen Material eines Jochkörpers (20) oder der Rotorwelle (3) zugeordnet ist.

## Claims

1. Device for magnetic bearing of a rotor shaft (3) with respect to a stator having the following features:
a) a first bearing part (4) is connected to the rotor shaft (3) and is surrounded by a second bearing part (7), which is associated with the stator, with a distance between them,
b) the first bearing part (4) contains soft-magnetic rotor disc elements (4i) which are aligned at right angles to the axis (A) of the rotor shaft (3), are arranged one behind the other in the direction of this axis (A) and are each separated, forming an intermediate space (5j),
c) the second bearing part (7) contains soft-magnetic stator disc elements (7i), which are aligned at right angles to the rotor shaft axis (A), are arranged one behind the other in the direction of this axis (A), are at a distance from one another and which each project into one of the intermediate spaces (5j) of adjacent rotor disc elements (4i),
d) the rotor disc elements (4i) and the stator disc elements (7i) are provided on their respectively mutually facing sides with annular tooth-like projections (4f and 7f, respectively) which are each opposite one another separated by an air gap (8k),
e) the mutually facing flat faces of the rotor disc elements (4i) and stator disc elements (7i) which are provided with the tooth-like projections (4f, 7f) are arranged at an angle to a perpendicular to the rotor shaft axis (A),
f) magnetic-field-generating means are associated with the rotor disc elements (4i) or the stator disc elements (7i) in order to generate a magnetic flux (Mf) directed essentially in a common axial direction between the disc elements (4i, 7i),
and
g) the air gap (8k) between opposite tooth-like projections (4f and 7f) has an axial width which is between 0.2-times and 0.6-times the axial width of the tooth-like projections (4f and 7f).

2. Magnetic bearing device as claimed in Claim 1, **characterized by** the flat faces of the rotor disc elements (4i) and of the stator disc elements (7i) being inclined at an angle of between 7° and 15° to a perpendicular to the rotor shaft axis (A).

3. Magnetic bearing device according to Claim 1 or 2, **characterized in that** the tooth-like projections (4f, 7f) are trapezoidal when seen in a longitudinal section.

4. Device for magnetic bearing of a rotor shaft (3) with respect to a stator having the following features:
a) a first bearing part (4) is connected to the rotor shaft (3) and is surrounded by a second bearing part (7), which is associated with the stator, with a distance between them,
b) the first bearing part (4) contains soft-magnetic rotor disc elements (4i) which are aligned at right angles to the axis (A) of the rotor shaft (3), are arranged one behind the other in the direction of this axis (A) and are each separated, forming an intermediate space (5j),
c) the second bearing part (7) contains soft-magnetic stator disc elements (7i), which are aligned at right angles to the rotor shaft axis (A), are arranged one behind the other in the direction of this axis (A), are at a distance from one another and which each project into one of the intermediate spaces (5j) of adjacent rotor disc elements (4i),
d) the rotor disc elements (4i) and the stator disc elements (7i) are provided on their respectively mutually facing sides with annular tooth-like projections (4f and 7f, respectively) which are each opposite one another separated by an air gap (8k),
e) the tooth-like projections (4f, 7f) are trapezoidal when seen in a longitudinal section,
f) magnetic-field-generating means are associated with the rotor disc elements (4i) or the stator disc elements (7i) in order to generate a magnetic flux (Mf) directed essentially in a common axial direction between the disc elements (4i, 7i),
and
g) the air gap (8k) between opposite tooth-like projections (4f and 7f) has an axial width which is between 0.2-times and 0.6-times the axial width of the tooth-like projections (4f and 7f).

5. Magnetic bearing device as claimed in one of the preceding claims, **characterized in that**, in order to close the magnetic flux circuit, axially extending soft-magnetic material is provided outside the intermediate spaces (5j), between the rotor disc elements (4i) and the stator disc elements (7i) on the radially inner or outer edge of the disc elements (4i, 7i) with which the magnetic-field-generating means are not associated.

6. Magnetic bearing device as claimed in Claim 5, **characterized in that** the soft-magnetic material is provided for closing the magnetic flux circuit through an axially running yoke body (16, 20) or through at least parts of the rotor shaft (3).

7. Magnetic bearing device as claimed in one of the preceding claims, **characterized in that** the magnetic-field-generating means are permanent-magnet elements (4m, 7m, 19m).

8. Magnetic bearing device as claimed in Claim 7, **characterized in that** the permanent-magnet elements (4m, 7m) are integrated at least in some of the rotor disc elements (4i) or stator disc elements (7i).

9. Magnetic bearing device as claimed in Claim 8, **characterized in that** the disc elements (4i or 7i) with the permanent-magnet elements (4m or 7m) are each subdivided axially into two halves, between which the permanent-magnet elements (4m, 7m) are arranged.

10. Magnetic bearing device as claimed in Claim 8 or 9, **characterized in that** the disc elements (4i or 7i) with the permanent-magnet elements (4m or 7m) have a greater extent radially than the disc elements without permanent-magnet elements.

11. Magnetic bearing device as claimed in one of the preceding claims, **characterized in that** the magnetic-field-generating means are formed by at least one winding (23, 26) of an electromagnet.

12. Magnetic bearing device as claimed in Claim 11, **characterized in that** the at least one magnet winding (23, 26) is arranged on the radially inner or outer edge of the rotor disc elements (4i) or of the stator disc elements (7i).

13. Magnetic bearing device as claimed in Claim 11 or 12, **characterized in that** the at least one magnet winding (23, 26) is associated with axially running soft-magnetic material of a yoke body (20) or of the rotor shaft (3).

## Revendications

1. Dispositif de mise en place magnétique d'un arbre (3) rotorique par rapport à un stator ayant les caractéristiques suivantes :
a) une première pièce ( 4 ) de palier est reliée à l'arbre ( 3 ) rotorique et est entourée avec une distance mutuelle d'une deuxième pièce ( 7 ) de palier associée au stator,
b) la première pièce (4) de palier comporte des éléments ( 4i ) de disque rotorique, dirigés perpendiculairement à l'axe (A) de l'arbre ( 3 ) rotorique, disposés les uns derrière les autres dans la direction de cet axe (A), à magnétisme doux et à distance les uns des autres avec formation d'un intervalle ( 5 ),
c) la deuxième pièce (7) de palier comporte des éléments ( 7i ) de disque statorique, dirigés perpendiculairement à l'axe ( A ) rotorique, disposés les uns derrière les autres dans la direction de cet axe à distance les uns des autres, à magnétisme doux et qui pénètrent respectivement dans l'un des intervalles (5j) d'éléments (4i) de disque rotorique voisins,
d) les éléments ( 4i ) de disque rotorique et les éléments ( 7i ) de disque statorique sont pourvus, sur leurs côtés tournés respectivement l'un vers l'autre, de prolongements ( 4f et 7f ) annulaires, en forme de dent et opposés respectivement par un entrefer ( 8k ),
e) les surfaces plates, tournées l'une vers l'autre et pourvues des prolongements ( 4f, 7f ) en forme de dent, des éléments ( 4i ) de disque rotorique et des éléments ( 7i ) de disque statorique sont inclinées par rapport à une perpendiculaire de l'axe ( A ) de l'arbre rotorique,
f) aux éléments (4i) de disque rotorique ou aux éléments ( 7i ) de disque statorique, sont associés des moyens de production d'un champ magnétique, pour la production d'un flux ( Mf ) magnétique dirigé entre les éléments ( 4i, 7i ) de disque sensiblement dans une direction axiale commune,
et
g) l'entrefer ( 8k ) a, entre des prolongements ( 4f et 7f ) opposés en forme de dent, une largeur axiale qui représente entre 0,2 fois et 0,6 fois la largeur axiale des prolongements ( 4f et 7f ) en forme de dent.

2. Dispositif de palier magnétique suivant la revendication 1, **caractérisé par** une inclinaison des côtés plats des éléments ( 4i ) de disque rotorique et des éléments ( 7i ) de disque statorique d'un angle compris entre 7° et 15° par rapport à une perpendiculaire à l'axe ( A ) de l'arbre rotorique.

3. Dispositif de palier magnétique suivant la revendication 1 ou 2, **caractérisé en ce que** les prolongements ( 4f, 7f ) en forme de dent sont conformés en forme de trapèze vus en coupe longitudinale.

4. Dispositif de mise en place magnétique d'un arbre (3) rotorique par rapport à un rotor ayant les caractéristiques suivantes :
a) une première pièce (4 ) de palier est reliée à l'arbre (3 ) rotorique et est entourée avec mise à distance mutuelle d'une deuxième pièce (7 ) de palier associée au stator,
b) la première pièce (4) de palier comporte des éléments (4i) de disque rotorique, dirigés perpendiculairement à l'axe (A) de l'arbre (3) rotorique, disposés les uns derrière les autres dans la direction de cet axe (A), à magnétisme doux et à distance les uns des autres avec formation d'un intervalle (5j ),
c) la deuxième pièce (7) de palier comporte des éléments (7i ) de disque statorique, dirigés perpendiculairement à l'axe (A) rotorique, disposés les uns derrière les autres dans la direction de cet axe à distance les uns des autres, à magnétisme doux et qui pénètrent respectivement dans l'un des intervalles (5j ) d'éléments (4i ) de disque rotorique voisins,
d) les éléments (4i) de disque rotorique et les éléments (7i ) de disque statorique sont pourvus, sur leurs côtés tournés respectivement l'un vers l'autre, de prolongements (4f et 7f ) annulaires en forme de dent et opposés respectivement par un entrefer (8k ),
e) les prolongements (4f, 7f ) en forme de dent sont conformés en forme de trapèze vus dans une direction longitudinale,
f) aux éléments (4i) de disque rotorique ou aux éléments (7i) de disque statorique, sont associés des moyens de production d'un champ magnétique, pour la production d'un flux (Mf ) magnétique dirigé entre les éléments (4i, 7i ) de disque sensiblement dans une direction axiale commune,
et
g) l'entrefer (8k) a, entre des prolongements (4f et 7f ) opposés en forme de dent, une largeur axiale qui représente entre 0,2 fois et 0,6 fois la largeur axiale des prolongements (4f et 7f ) en forme de dent.

5. Dispositif de palier magnétique suivant l'une des revendications précédentes, **caractérisé en ce qu'**à l'extérieur des intervalles ( 5j ), entre les éléments ( 4i ) de disque rotorique et les éléments ( 7i ) de disque statorique, au bord intérieur ou extérieur radialement des éléments ( 4i, 7i ) de disque, auxquels les moyens produisant un champ magnétique ne sont pas associés, il est prévu un matériau à magnétisme doux et s'étendant axialement de fermeture du circuit de flux magnétique.

6. Dispositif de palier magnétique suivant la revendication 5, **caractérisé en ce que** le matériau à magnétisme doux de fermeture du circuit de flux magnétique est procuré par une culasse ( 16, 20 ) s'étendant axialement ou par au moins des parties de l'arbre ( 3 ) rotorique.

7. Dispositif de palier magnétique suivant l'une des revendications précédentes, **caractérisé en ce que** les moyens produisant un champ magnétique sont des éléments (4m, 7m, 19m ) à magnétisme permanent.

8. Dispositif de palier magnétique suivant la revendication 7, **caractérisé en ce que** les éléments (4m, 7m) à magnétisme permanent sont intégrés, au moins dans certains des éléments ( 4i ) de disque rotorique ou des éléments ( 7i ) de disque statorique.

9. Dispositif de palier magnétique suivant la revendication 8, **caractérisé en ce que** les éléments ( 4i ou 7i ) de disque avec les éléments (4m ou 7m ) à magnétisme permanent sont subdivisés respectivement axialement en deux moitiés entre lesquelles les éléments ( 4m, 7m ) à magnétisme permanent sont placés.

10. Dispositif de palier magnétique suivant la revendication 8 ou 9, **caractérisé en ce que** les éléments (4i ou 7i) de disque avec les éléments ( 4m ou 7m) à magnétisme permanent ont radialement une étendue plus grande que les éléments de disque sans élément à magnétisme permanent.

11. Dispositif de palier magnétique suivant l'une des revendications précédentes, **caractérisé en ce que** les moyens produisant un champ magnétique sont formés par au moins un enroulement ( 23, 26 ) d'un électroaimant.

12. Dispositif de palier magnétique suivant la revendication 11, **caractérisé en ce que** le au moins un enroulement ( 23, 26 ) d'électroaimant est disposé sur le bord intérieur ou extérieur radialement des éléments (4i) de disque rotorique ou des éléments ( 7i ) de disque statorique.

13. Dispositif de palier magnétique suivant la revendication 11 ou 12, **caractérisé en ce que** le au moins un enroulement ( 23, 26) d'électroaimant est associé à du matériau s'étendant axialement et à magnétisme doux d'une culasse (20) ou de l'arbre ( 23 ) rotorique.
